# EUROPEAN PATENT APPLICATION

(11) **EP 1 901 312 A1**
(43) Date of publication of application: **19.03.2008**
(21) Application number: 06405382.0
(22) Date of filing: 05.09.2006
(51) Int. Cl.: H01B 3/30, C08L 79/02

(54) **Electrical insulation system based on polybenzoxazine**

(71) Applicant: ABB RESEARCH LTD., 8050 Zürich (CH)
(72) Inventor: Kommann, Xavier, 8600 Dübendorf (CH); Kaltenegger, Kurt, 5426 Lengnau (CH); Rocks, Jens, 8057 Zürich (CH); Weder, Reto, 5245 Habsburg (CH)
(74) Representative: ABB Patent Attorneys

(57) **Abstract**

Electrical insulation system, comprising a polymeric material and optionally a filler material and/or further additives, wherein said polymeric material is a polybenzoxazine.

## Description

The present invention refers to an electrical insulation system based on polybenzoxazine, to be used for example for bushings, instruments and distribution transformers.

### State of the art

Currently, electrical insulation systems are made of anhydride-cured epoxies. The reason why electrical insulations are widely made from these materials is because they offer a good compromise between cost, electrical, mechanical and thermal properties. Anhydride cured epoxies, however, present some important drawbacks from an environmental as well as from the mechanical point of view. The use of anhydrides is under scrutiny of different authorities and could eventually be banned in the future. Anhydride-cured epoxies further are multi-component systems including at least an epoxy resin, an anhydride curing agent and a catalyst which components require to be stored separately prior to mixing. Anhydride-cured epoxies also are crack sensitive materials which causes problems in various manufacturing processes.

### Description of the invention

It has now been found that polybenzoxazine, preferably comprising a filler material, can be used as an electrical insulation system for example for bushings, instruments and distribution transformers. Polybenzoxazine is anhydride free and easy to process.

Moreover, it has been discovered that polybenzoxazine has surprisingly good electrical properties and near zero shrinkage upon cure. Polybenzoxazine further offers new manufacturing possibilities which allow a decrease of production cycle time and also offers the possibility of manufacturing bulky parts with limited residual stresses.

The present invention is defined in the claims. The present invention refers to an electrical insulation system, comprising a polymeric material and optionally a filler material and/or further additives, characterized in that said polymeric material is a polybenzoxazine.

The present invention further refers to an electrical insulation system comprising a polybenzoxazine and optionally a filler material and/or further additives, characterized in that said polybenzoxazine has been obtained by polymerizing benzoxazine, or a low molecular weight oligomeric polybenzoxazine and that said polybenzoxazine comprises at least one filler material or a mixture of such filler materials in an amount of up to 85% by weight, calculated to the total weight of the insulation system.

The present invention further refers to an electrical insulation system comprising a polybenzoxazine and optionally a filler material and/or further additives, characterized in that said polybenzoxazine comprises at least one hydrophobic compound or a mixture of such compounds, preferably an organopolysiloxane, in an amount of 0.1% to 10% by weight, calculated to the total weight of the insulation system.

The present invention further refers to an electrical insulation system comprising a polybenzoxazine, and optionally a filler material and/or further additives, characterized in that said polybenzoxazine comprises at least one filler material or a mixture of such filler materials in an amount of up to 85% by weight, and at least one hydrophobic compound or a mixture of such compounds, preferably an organopolysiloxane, in an amount of 0.1% to 10% by weight, each calculated to the total weight of the insulation system.

The present invention further refers to the use of polybenzoxazine, optionally comprising a filler material and/or further additives as defined herein, as an electrical insulation system.

The present invention refers also to a method of making an electrical insulation system, based on a polybenzoxazine, optionally comprising a filler material and/or further additives as defined herein, which is characterized by (i) mixing benzoxazine monomer or a low molecular weight oligomeric polybenzoxazine, optionally a catalyst and any filler material and/or further additives, which optionally may be present, in any desired sequence, (ii) optionally applying the mixture obtained to the surface of a shaped article, and (iii) polymerizing the mixture.

The polybenzoxazine represents at least 15% by weight of the electrical insulation system, and preferably is present within the electrical insulation system within the range of 15% to 95% by weight, preferably within the range of 20% to 60% by weight, preferably within the range of 20% to 40% by weight, preferably within the range of 25% to 35% by weight, calculated to the total weight of the electrical insulation system.

Polybenzoxazine is known as a linear or cross-linked thermoset polymer which is formed by ring-opening polymerization of benzoxazine which is the monomer precursor. Polybenzoxazine has been described for example in Modern Plastic, 87-89, (June 1998). The polymerization of benzoxazine can schematically be illustrated as follows: 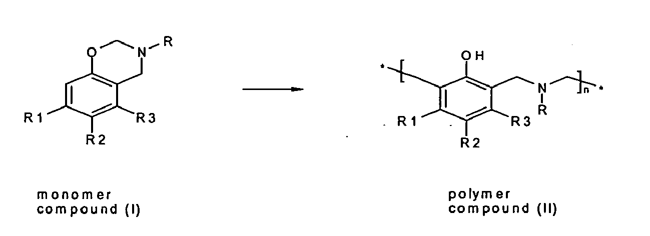 wherein
R is (C₁₋₄)-alkyl or phenyl or substituted phenyl; preferably methyl or phenyl; preferably phenyl;
R₁, R₂, and R₃ are independently of each other hydrogen, halogen, (C₁₋₄)-alkyl or phenyl or substituted phenyl; preferably independently of each other hydrogen, methyl or phenyl; preferably hydrogen; and wherein in addition one of the substituents R₁, R₂ or R₃ may be a residue of formula (III): 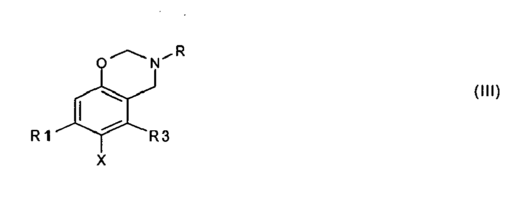 wherein X is -O-, -CH₂- or para-phenylene or ortho-phenylen; preferably the oxygen bridge (-O-) or methylene (-CH₂-).

If the monomeric compound (I) does not contain a residue of formula (III), then the polymeric compound (II) obtained therefrom is a substantially linear polymer. If, however, the monomeric compound (I) does have a residue of formula (III), then the polymeric compound (II) obtained therefrom is a three-dimensionally cross-linked polymer.

The preferred monomeric benzoxazine compounds are given by the following formulas (IV), (V), (VI) and (VII): 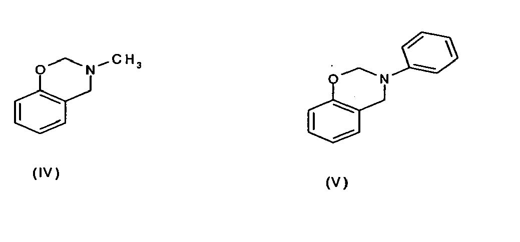 and

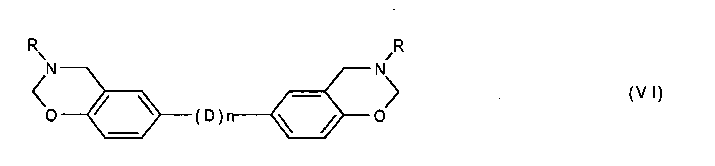

D = -O-, -CO-, CH2-, -C(CH3)2-

n = Null oder 1

and 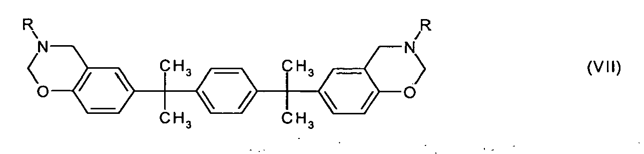 wherein R has the meaning as given herein before.

In order to polymerize the monomeric benzoxazine or the mixture comprising the monomeric benzoxazine is heated preferably to a temperature within the range of 160°C and 220°C for several minutes to several hours depending on the type of benzoxazine monomer. The monomers may be polymerized without the addition of a catalyst. However, polymerization catalysts are known and may be added in known quantities.

According to an embodiment of the present invention the insulator system preferably comprises at least one filler material or a mixture of such filler materials. Filler materials for electrical isolation systems are known per se. Care must be taken that the fillers and generally the additives do not affect the polymerization of the monomer and/or the activity of the polymerization catalyst. Fillers are preferably selected from the group comprising natural purified sands; silicon oxides and silicon hydroxides; aluminum oxides and aluminum hydroxides; titanium oxides and titanium hydroxides; zinc oxides and hydroxides; silicates, preferably sodium/potassium silicates, silicon aluminosilicates; mineral carbonates, preferably calcium-magnesium carbonate or calcium-silicon-magnesium carbonates; geopolymers, preferably trolites and/or zeolites based on aluminosilicates or other alkaline earth metals, glasses, mica, ceramic particles. Preferred are silicon oxides, aluminum oxides, titanium oxides, silicates, preferably silicon oxides (SiO₂, Quarz), aluminum oxides and hydroxides, zinc oxide, sodium/potassium silicates and/or silicon aluminosilicates. The filler may be surface treated, e.g. silanized, or untreated or be mixture thereof.

The mineral filler compound or the mixture of such compounds have a preferred average grain size (at least 50% of the grains) in the range of from about 1.0 µm to 200 µm, preferably in the range of from 1 µm to 100 µm, preferably in the range of from 5 µm to 50 µm, preferably in the range of from 5 µm to 40 µm, and especially in the range of from 5 µm to 35 µm.

The polybenzoxazine preferably comprises at least one filler material or a mixture of such filler materials in an amount of up to 85% by weight. The proportion of the filler material in the insulator system is preferably in the range of from 5% to 85% by weight, preferably in the range of from 40% to 80% by weight, and in particular in the range of from 60% to 80% by weight, preferably in the range of from 65% to 75% by weight, calculated to the total weight of the insulation system, i.e. polymer, filler and further additives.

In a further embodiment of the present invention the electrical insulation system comprises at least one hydrophobic compound or a mixture of such compounds, especially for improving the self-healing properties of the electrical insulator. For this purpose the benzoxazine monomer is uniformly mixed with the hydrophobic compound or a mixture of said compounds, said hydrophobic compounds being selected from the group comprising flowable fluorinated or chlorinated hydrocarbons which comprise -CH₂-units, -CHF-units, -CF₂-units, -CF₃-units, -CHCl-units, -C(Cl)₂-units, -C(Cl)₃-units, or mixtures thereof; or a cyclic, linear or branched flowable organopolysiloxane. Said hydrophobic compound or said mixture of said compounds may be present in encapsulated form.

The hydrophobic compound preferably has a viscosity in the range from 50 cSt to 10,000 cSt, preferably in the range from 100 cSt to 10,000 cSt, preferably in the range from 500 cSt to 3000 cSt, measured in accordance with DIN 53 019 at 20°C.

Preferably the hydrophobic compound comprises a compound, or a mixture of compounds, of the general formula (VIII): 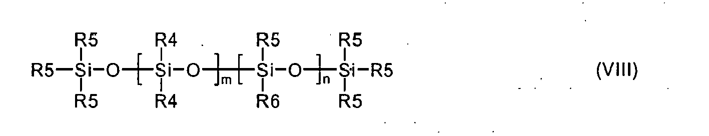 in which
R₄ independently of each other is an unsubstituted or chlorinated or fluorinated alkyl-radical having from 1 to 8 carbon atoms, (C₁-C₄-alkyl)aryl, or aryl;
R₅ independently at each occurrence has one of the definitions of R₄ or R₆, it being possible for two terminal substituents R₅ attached to different Si atoms, being taken together to be an oxygen atom (= cyclic compound);
R₆. has one of the definitions of R₄, or is hydrogen or a residue -CH₂-[CH-CH₂(O)] or -C₂H₄-[CH-CH₂(O)];
m is on average from zero to 5000;
n is on average from zero to 100;
   the sum of [m+n] for non-cyclic compounds being at least 20, and the' sequence of the groups -[Si(R₄)(R₄)O]- and -[Si(R₅)(R₆)O]- in the molecule being arbitrary.

The formula -[CH-CH₂(O)] has the meaning the epoxy substituent.

Preferred is the compound of the formula (VIII), wherein R₄ independently of each other is an unsubstituted or fluorinated alkyl radical having from 1 to 4 carbon atoms or phenyl; m is on average from 20 to 5000; n is on average from 2 to 100; the sum of [m+n] for non-cyclic compounds being on average in the range from 20 to 5000, and the sequence of the groups -[Si(R₄)(R₄)O]-and -[Si(R₅)(R₆)O]- in the molecule being arbitrary.

Preferred is the compound of the formula (VIII), wherein R₄ independently of each other is 3,3,3-trifluoropropyl, monofluoromethyl, difluoromethyl, or alkyl having 1-4 carbon atoms; m is on average from 50 to 1500; n is on average from 2 to 20; the sum of [m+n] for non-cyclic compounds being on average in the range from 50 to 1500, and the sequence of the groups -[Si(R₄)(R₄)O]- and -[Si(R₅)(R₆)O]- in the molecule being arbitrary. Most preferred is a compound of the formula (VIII) wherein each R₄ is methyl.

Preferred cyclic compounds of formula (VIII) are those comprising 4-12, and preferably 4-8, -[Si(R₄)(R₄)O]- units or -[Si(R₅)(R₆)O]- units or a mixture of these units.

The hydrophobic compound is added to the benzoxazine monomer preferably in an amount of from 0.1% to 5%, preferably in an amount of from 0.25% to 5% by weigh, preferably in an amount of from 0.25% to 3% by weight, calculated to the weight of the benzoxazine monomer.

The mixing of polybenzoxazine monomer with fillers can be carried out for instance with a conventional mixer, a brabender, an extruder, or an injection molding machine. The optional catalyst may be added either prior or after the compounding of the resin with the filler depending on the process and the reactivity of the mix.

The electrical insulation system according to the present invention may optionally comprise further additives. Such additives are pigments, antioxidants, light stabilizers and polymeric modifiers. Such additives are known. For polymerizing the mixture of benzoxazine, all additives are added and well mixed with the monomer.

Antioxidant is optionally added, preferably in a concentration of up to 1.5 % by weight calculated to the total weight of the composition. Preferably phenolic or amine antioxidants are used such as 2,6-tert.-butyl-p-cresol, N,N'-diphenyl-p-phenylene diamine.

Preferred uses of the insulation systems produced according to the present invention are high-voltage insulations for outdoor use, especially for outdoor insulators associated with high-voltage lines, as long-rod, composite and cap-type insulators, and also for base insulators in the medium-voltage sector, in the production of insulators associated with outdoor power switches, measuring transducers, leadthroughs, and overvoltage protectors, in switchgear construction, in power switches, dry-type transformers, and electrical machines, as coating materials for transistors and other semiconductor elements and/or to impregnate electrical components. The present invention further refers to the electrical articles comprising an electrical insulation system according to the present invention. The following examples illustrate the invention.

### Example 1

A formulation was prepared by uniformly mixing 100 parts (pbw) of benzoxazine of the above formula (VI) wherein D = methylene (-CH₂-), n = zero and R = phenyl (from Shikoku Chemical Corp.) with 186 parts (pbw) of dry silica powder (Millisil® B12 from Silhelco) having an average particle size (d_{50%}) of 16µm. The mixture was then heated until the monomer had polymerized to form a high molecular weight cross-linked polybenzoxazine polymer with a filler content of 65% by weight.

The mixing phase is carried out with a conventional mixer, a brabender, an extruder, or an injection molding machine. The mould was filled at room temperature, outgassed, heated to a temperature of 180°C during 4 hours so that the benzoxazine polymerized completely and to form a high molecular weight cross-linked polybenzoxazine.

### Example 2 (Comparative Example)

A formulation was prepared by uniformly mixing 100 parts (pbw) of epoxy resin CY 228, 85 parts (pbw) of hardener HY 918 (both from Huntsman Corp.), and 0.8 parts (pbw) of accelerator DY 062 with 345 parts (pbw) of dry silica powder (Millisil® B12 from Silhelco) having an average particle size (d_{50%}) of 16µm. The mixture was then heated until it had polymerized to form a high molecular weight cross-linked polymer.

The mixing phase is carried out with a conventional mixer, a brabender, an extruder, or an injection molding machine. The mould was filled at room temperature, outgassed, heated first to 80°C for 4 hours and then to a temperature of 140°C for 10 hours so that the epoxy mixture polymerized completely to form a high molecular weight cross-linked solid.

### Results

The properties of the polybenzoxazine as obtained in Example 1 were compared with the properties of the polymerized epoxy resin as obtained in Example 2. Results of the comparison of the properties are given in Table 1, Figure 1 and Figure 2.

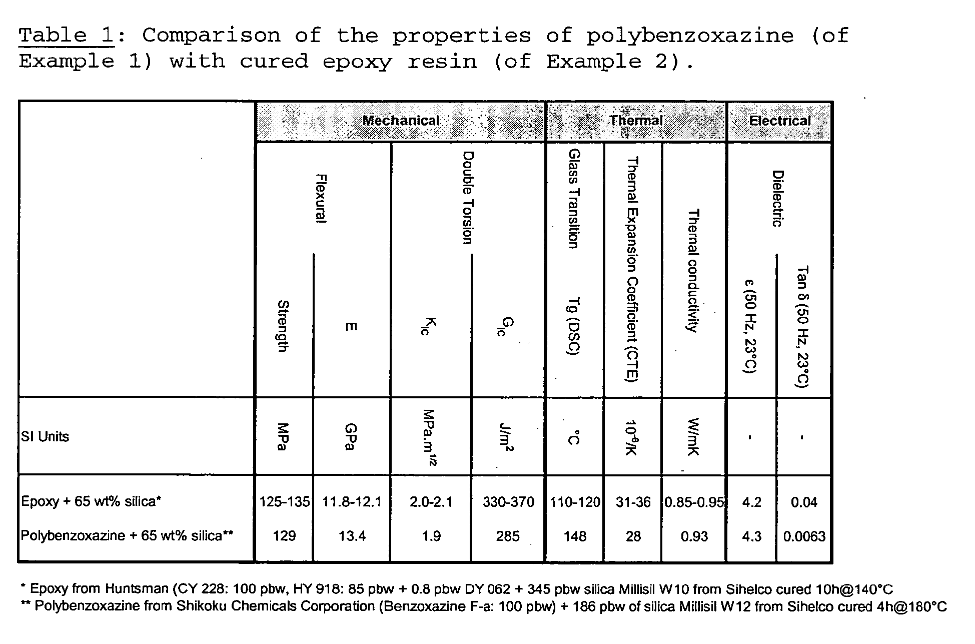

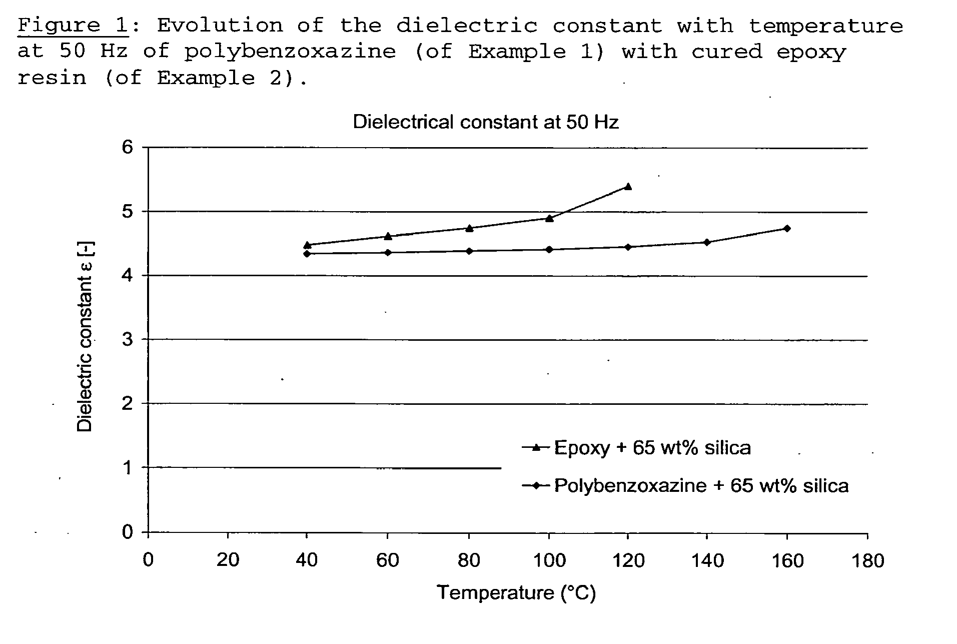

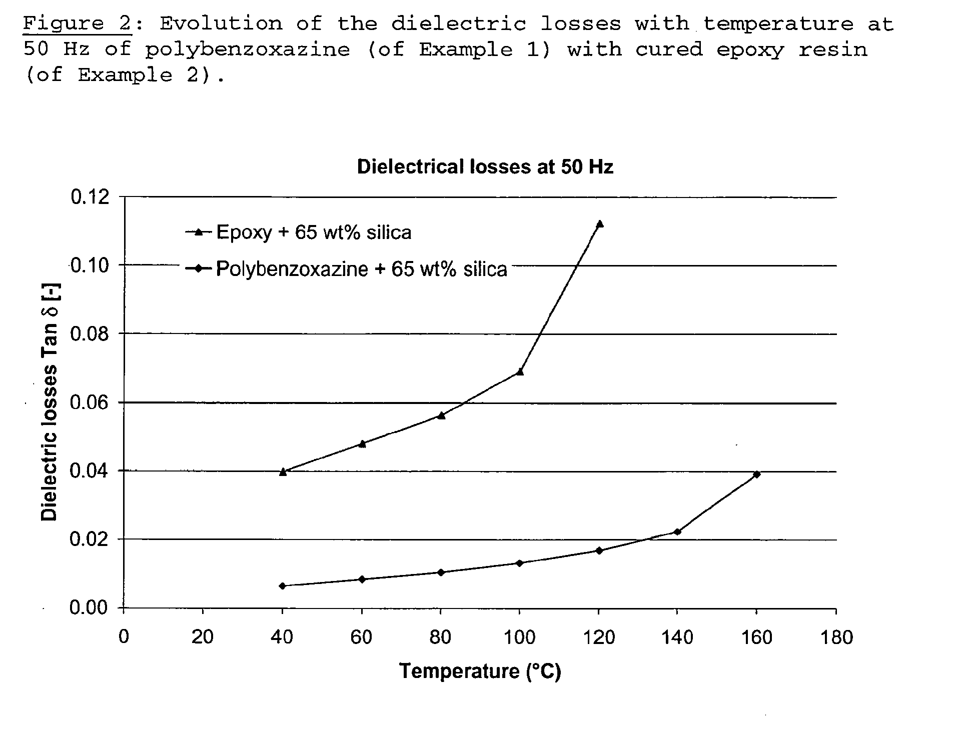

## Claims

1. Electrical insulation system, comprising a polymeric material and optionally a filler material and/or further additives, **characterized in that** said polymeric material is a polybenzoxazine.

2. Electrical insulation system according to claim 1, **characterized in that** the polybenzoxazine represents at least 15% by weight of the electrical insulation system, and preferably is present within the electrical insulation system within the range of 15 % to 95 % by weight, preferably within the range of 20 % to 60 % by weight, preferably within the range of 20 % to 40 % by weight, preferably within the range of 25 % to 35 % by weight, calculated to the total weight of the electrical insulation system.

3. Electrical insulation system according to claim 1 or 2, **characterized in that** the polybenzoxazine has been obtained by polymerizing benzoxazine, or a low molecular weight oligomeric polybenzoxazine, optionally in the presence of a suitable catalyst, and **in that** said polybenzoxazine comprises at least one filler material or a mixture of such filler materials in an amount of from 5% to 85% by weight, calculated to the total weight of the insulation system.

4. Electrical insulation system according to any one of the claims 1-3, **characterized in that** said polybenzoxazine comprises at least one hydrophobic compound or a mixture of such compounds, preferably an organopolysiloxane, in an amount of 0.1% to 10% by weight, calculated to the total weight of the insulation system.

5. Electrical insulation system according to any one of the claims 2-4, **characterized in that** said polybenzoxazine has been obtained by polymerizing a monomeric benzoxazine compound (I): 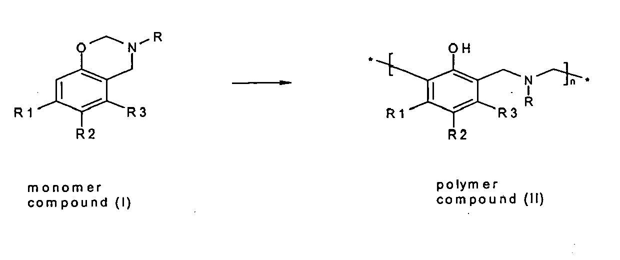 wherein
R is (C₁₋₄)-alkyl or phenyl or substituted phenyl; preferably methyl or phenyl; preferably phenyl;
R₁, R₂, and R₃ are independently of each other hydrogen, halogen, (C₁₋₄)-alkyl or phenyl or substituted phenyl; preferably independently of each other hydrogen, methyl or phenyl; preferably hydrogen; and wherein in addition one of the substituents R₁, R₂ or R₃ may be a residue of formula (III): 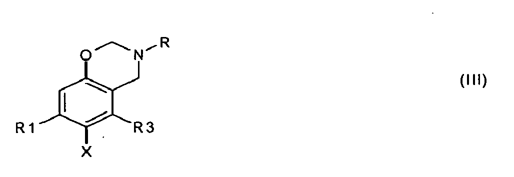 wherein X is -O-, -CH₂- or para-phenylene or ortho-phenylen; preferably the oxygen bridge (-O-) or methylene (-CH₂-).

6. Electrical insulation system according to claim 5, **characterized in that** said polybenzoxazine has been obtained from a monomeric benzoxazine compound of formula (IV), (V), (VI) and/or (VII): 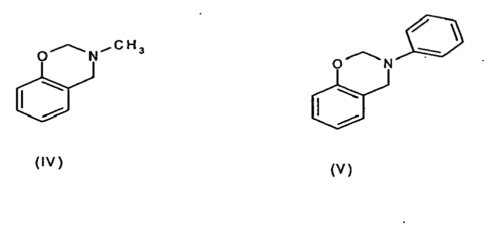 and/or 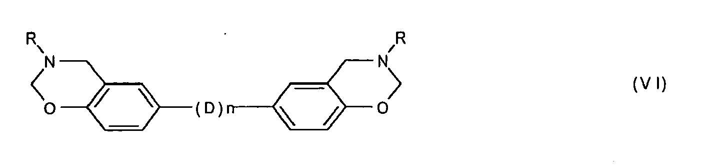
D = -O-, -CO-, CH2-, -C(CH3)2-
n = Null oder 1
and/or 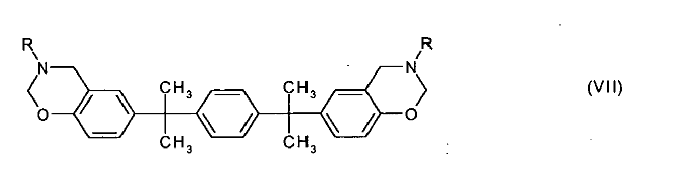 wherein R has the meaning according to claim 5.

7. Electrical insulation system according to claim 5 or 6, **characterized in that** said polybenzoxazine has been obtained from a monomeric benzoxazine or the mixture comprising the monomeric benzoxazine by heating to a temperature within the range of 160°C and 220°C.

8. Electrical insulation system according to any one of the claims 1-7, **characterized in that** the insulator system comprises at least one filler material or a mixture of such filler materials, said at least one filler material or the mixture of such filler materials preferably being selected from the group comprising natural purified sands; silicon oxides and silicon hydroxides; aluminum oxides and aluminum hydroxides; titanium oxides and titanium hydroxides; zinc oxides and hydroxides; silicates, preferably sodium/potassium silicates, silicon aluminosilicates; mineral carbonates, preferably calcium-magnesium carbonate or calcium-silicon-magnesium carbonates; geopolymers, preferably trolites and/or zeolites based on aluminosilicates or other alkaline earth metals, glasses, mica, ceramic particles.

9. Electrical insulation system according to claim 8, **characterized in that** the at least one filler material or the mixture of such filler materials, is selected from silicon oxides, aluminum oxides, titanium oxides, silicates, preferably silicon oxides (SiO₂, Quarz), aluminum oxides and hydroxides, zinc oxide, sodium/potassium silicates and/or silicon aluminosilicates.

10. Electrical insulation system according to claim 8 or 9, **characterized in that** said at least one filler material or the mixture of such filler materials, is surface treated, preferably silanized.

11. Electrical insulation system according to any one of the claims 8, 9 or 10, **characterized in that** said at least one filler material or the mixture thereof, preferably has an average grain size within the range of from about 1.0 µm to 200 µm, preferably in the range of from 1 µm to 100 µm, preferably in the range of from 5 µm to 50 µm, preferably in the range of from 5 µm to 40 µm, and especially in the range of from 5 µm to 35 µm.

12. Electrical insulation system according to any one of the claims 8, 9 or 10, **characterized in that** said at least one filler material or mixture of such filler materials is present in an amount of from 5 % to 85 % by weight, preferably in the range of from 40 % to 80 % by weight, and in particular in the range of from 60 % to 80 % by weight, preferably in the range of from 65 % to 75 % by weight, calculated to the total weight of the insulation system.

13. Electrical insulation system according to any one of the claims 1-12, **characterized in that** said electrical insulation system comprises at least one hydrophobic compound or a mixture of such compounds, selected from the group comprising flowable fluorinated or chlorinated hydrocarbons which comprise -CH₂-units, ,-CHF-units, -CF₂-units, -CF₃-units, -CHCl-units, -C(Cl)₂-units, -C(Cl)₃-units, or mixtures thereof; or a cyclic, linear or branched flowable organopolysiloxane, preferably having a viscosity in the range from 50 cSt to 10,000 cSt, preferably in the range from 100 cSt to 10,000 cSt, preferably in the range from 500 cSt to 3000 cSt, measured in accordance with DIN 53 019 at 20°C.

14. Electrical insulation system according to claim 4 or claim 13, **characterized in that** said hydrophobic compound comprises a compound, or a mixture of compounds, of the general formula (VIII): 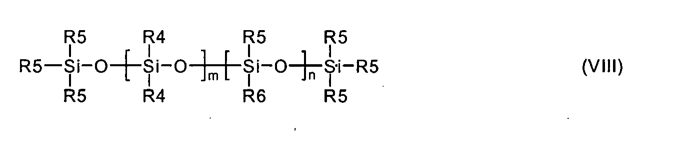 in which
R₄ independently of each other is an unsubstituted or chlorinated or fluorinated alkyl radical having from 1 to 8 carbon atoms, (C₁-C₄-alkyl)aryl, or aryl;
R₅ independently at each occurrence has one of the definitions of R₄ or R₆, it being possible for two terminal substituents R₅ attached to different Si atoms, being taken together to be an oxygen atom (= cyclic compound);
R₆ has one of the definitions of R₄, or is hydrogen or a residue -CH₂-[CH-CH₂(O)] or -C₂H₄-[CH-CH₂(O)];
m is on average from zero to 5000;
n is on average from zero to 100;
the sum of [m+n] for non-cyclic compounds being at least 20, and the sequence of the groups -[Si(R₄)(R₄)O]- and -[Si(R₅)(R₆)O]- in the molecule being arbitrary.

15. Electrical insulation system according to any one of the claims 4, 13 and 14, **characterized in that** said hydrophobic compound is added to the benzoxazine monomer in an amount of from 0.1 % to 5 %, preferably in an amount of from 0.25 % to 5 % by weight, preferably in an amount of from 0.25 % to 3 % by weight, calculated to the weight of the benzoxazine monomer.

16. Electrical insulation system according to any one of the claims 1-15, **characterized in that** it comprises further additives, selected from pigments, antioxidants, light stabilizers and polymeric modifiers.

17. Method of making an electrical insulation system, according to any one of the claims 1-16, **characterized by** (i) mixing a benzoxazine monomer or a low molecular weight oligomeric polybenzoxazine, optionally a catalyst and any filler material and/or further additives, which optionally may be present, in any desired sequence, (ii) optionally applying the mixture obtained to the surface of a shaped article, and (iii) polymerizing the mixture.

18. The use of polybenzoxazine, optionally comprising a filler and/or further additives as defined in any of the claims 2-16, as an electrical insulation system.

19. Electrical articles comprising an electrical insulation system according to any one of the claims 1-18.

20. Electrical insulation system according to any one of the claims 1-19, in the form of high-voltage insulations for outdoor use, especially for outdoor insulators associated with high-voltage lines; as long-rod, composite and cap-type insulators; as base insulators in the medium-voltage sector; in the production of insulators associated with outdoor power switches; for measuring transducers, leadthroughs, and overvoltage protectors; in switchgear construction, in power switches, dry-type transformers, and electrical machines; as coating materials for transistors and other semiconductor elements and/or to impregnate electrical components.
